# EUROPÄISCHE PATENTSCHRIFT

(11) **EP 3 529 975 B1**
(45) Veröffentlichungstag und Bekanntmachung des Hinweises auf die Patenterteilung: **30.12.2020**
(21) Anmeldenummer: 17817661.6
(22) Anmeldetag: 23.11.2017
(51) Int. Cl.: H04L 29/12, B61L 15/00, B61L 25/02, B61L 27/00

(54) **KOMMUNIKATIONSSYSTEM FÜR EIN SCHIENENFAHRZEUG UND VERFAHREN ZUM BETREIBEN DES KOMMUNIKATIONSSYSTEMS**
COMMUNICATION SYSTEM FOR A RAIL VEHICLE, AND METHOD FOR OPERATING THE COMMUNICATION SYSTEM
SYSTÈME DE COMMUNICATION POUR UN VÉHICULE FERROVIAIRE ET PROCÉDÉ DE FONCTIONNEMENT DU SYSTÈME DE COMMUNICATION

(30) Priorität: 20.12.2016 DE 102016225585
(43) Veröffentlichungstag der Anmeldung: 28.08.2019
(73) Patentinhaber: Siemens Mobility GmbH, 81739 München (DE)
(72) Erfinder: RÖSSLER, Wolfgang, 91056 Erlangen (DE); SCHMIDT, Rudolf, 96172 Mühlhausen (DE); WINZEN, Andreas, 90403 Nürnberg (DE)
(86) Internationale Anmeldenummer: PCT/EP2017/080174
(87) Internationale Veröffentlichungsnummer: WO 2018/114203

(56) Entgegenhaltungen:
- EP-A1- 1 995 147
- DE-A1-102006 018 163
- US-A1- 2006 180 709

## Beschreibung

Die Erfindung betrifft ein Kommunikationssystem für ein Schienenfahrzeug sowie ein Verfahren zum Betreiben eines Kommunikationssystems eines Schienenfahrzeugs.

Grundsätzlich ist es bei Kommunikationssystemen wünschenswert, Funktionseinrichtungen des Kommunikationssystems eindeutig zu adressieren. Anhand der Adressierung können Informationen, beispielsweise in Form von Datenpaketen, bei einer Übertragung mittels des Kommunikationssystems ihren Weg zur Funktionseinrichtung finden. Bei Triebzügen können gleiche und/oder unterschiedliche Funktionseinrichtungen in einem einzigen und/oder mehreren Wagen angeordnet sein.

Bisher wird eine Steuerung einer Funktion der Funktionseinrichtung sowie eine Kommunikation mit der Funktionseinrichtung mittels einer Steuerapplikation anhand eines absoluten Ortes bzw. einer absoluten Position der Komponente innerhalb des Schienenfahrzeugs ausgeführt. Die Steuerapplikation ist dabei für eine jeweilige Konfiguration des Schienenfahrzeugs ausgelegt.

US 2006/180709 A1 beschreibt ein Verfahren und System zur Zugtaufe über ein Kommunikationssystem, welches auf einem Internet Protokoll (IP) basiert. Es wird ein führender Wagen einer Vielzahl von Wagen, welche einen Zug bilden, identifiziert. Der Zug umfasst wenigstens eine Wageneinheit, wobei die erste Wageneinheit den führenden Wagen aufweist. Netzwerk- und Konfigurationsinformationen werden über ein Erkennungsprotokoll für Wagen in dem Zug erkannt. Die Netzwerk- und Konfigurationsinformationen werden über einen Broadcast an die Einheiten des Zugs gesendet. Die Topologie der Wagen und Einheiten des Zugs wird basierend auf den Netzwerk- und Konfigurationsinformationen sowie dem identifizierten führenden Wagen erzeugt. NAT-Übersetzungsadressen werden für feste IP-Adressen von Geräten in der Vielzahl von Wagen erzeugt. Routinginformationen werden zwischen Routern ausgetauscht, um eine Kommunikation zwischen Geräten innerhalb des Zugs unter Verwendung von NAT-Übersetzungsadressen zu ermöglichen.

DE 10 2006 018 163 A1 beschreibt ein Verfahren zur automatischen Adressvergabe an mobile Kommunikationsteilnehmer, die insbesondere Schienenfahrzeugen zugeordnet sind. Dabei wird zur Adressvergabe der Kommunikationsteilnehmer zumindest eine Kennung unmittelbar benachbarter Kommunikationsteilnehmer ermittelt und diese an einen als übergeordnete Einheit fungierenden Kommunikationsteilnehmer übermittelt. Die Einheit erkennt anhand der übermittelten Daten Nachbarschaftsbeziehungen zwischen den Kommunikationsteilnehmern, ermittelt anhand dieser erkannten Nachbarschaftsbeziehungen die Abfolge der Kommunikationsteilnehmer und nimmt eine daran angelehnte Adresszuweisung vor oder löst diese aus.

EP 1 995 147 A1 beschreibt ein Übertragungssystem für Schienenfahrzeuge. Das Übertragungssystem umfasst ein Übertragungsgerät mit einer Vielzahl von Übertragungsports. Das Übertragungsgerät ist an jedem einer Vielzahl von Fahrzeugen angebracht und zum Übertragen von Daten, die an einem Port empfangen werden, an einen benötigten Übertragungsport gemäß einer vorgeschriebenen Instruktion ausgebildet. Ein Übertragungspfad verbindet die Übertragungsgeräte, die in jedem der Vielzahl von Fahrzeugen angebracht sind. Ein elektrisches Gerät ist mit einem entsprechenden Übertragungsgerät verbunden und ausgebildet zum Austauschen von Daten mit dem Übertragungsgerät. Ein Übertragungsweiterleit-Steuergerät ist in einem entsprechenden Übertragungsgerät angeordnet und ausgebildet, eine Übertragungsstationsadresse des elektrischen Geräts, welches mit einem Host-Übertragungsgerät verbunden ist, zu setzen. Das Übertragungsgerät ist ausgebildet, beim Adressensetzen eines elektrischen Geräts mit einer automatischen Adressensetzfunktion in einem Netzwerk, in dem eine Vielzahl von elektrischen Geräten des gleichen Typs angeordnet ist, einen Zustand zu erzeugen, in dem nur das Übertragungsgerät selbst und ein mit dem Übertragungsgerät verbundenes elektrisches Gerät mit dem Netzwerk verbunden sind. Dieser Zustand wird durch Stoppen eines Datenaustauschs mit einem anderen Übertragungsgerät und Bezeichnen der Übertragungsstationsadressen des elektrischen Geräts gemäß einer vorgeschriebenen Einstellung erzeugt.

Vor diesem Hintergrund ist es Aufgabe der Erfindung, die Flexibilität hinsichtlich der Konfigurierbarkeit des Schienenfahrzeugs zu erhöhen.

Diese Aufgabe wird gelöst durch ein Kommunikationssystem für ein Schienenfahrzeug, umfassend: ein Kommunikationsnetzwerk, welches wenigstens eine Funktionseinrichtung aufweist, wobei der wenigstens einen Funktionseinrichtung eine Funktionalnetzwerkadresse für eine Adressierung der Funktionseinrichtung mittels einer Steuerapplikation zugeordnet ist und die Funktionalnetzwerkadresse einen funktionsspezifischen Anteil aufweist, welcher eine Funktion der Funktionseinrichtung bei einer vorgegebenen Konfiguration des Schienenfahrzeugs repräsentiert.

Mit der Erfindung wurde erkannt, dass die Verteilung von Funktionseinrichtungen von der Konfiguration des Schienenfahrzeugs abhängig ist. So können Einrichtungen zur Energiezufuhr und -umwandlung je nach Platzbedarf und Leistung in einem oder mehreren unterschiedlichen Wagen des Schienenfahrzeugs angeordnet sein. Einrichtungen für den Bistro- oder Restaurant-Betrieb können in einem oder mehreren speziell dafür vorgesehenen Wagen des Schienenfahrzeugs verortet sein. Des Weiteren können Einrichtungen zur Klimatisierung von Führerräumen und/oder Fahrgasträumen, Sanitäreinrichtungen und weitere Spezialeinrichtungen (z.B. ein Zugbegleiter-Abteil, Zugangsmöglichkeiten für Behinderte, etc.) an einem oder mehreren unterschiedlichen Orten im Schienenfahrzeug verortet sein. Für eine Ausführung einer Steuerapplikation ist es bei den bisherigen Lösungen erforderlich, dass die Steuerapplikation für eine bestimmte Konfiguration des Schienenfahrzeugs ausgelegt ist. Mit anderen Worten: Die Steuerapplikation kann die Funktionseinrichtungen bei bisherigen Lösungen nur bei einer vorgegebenen Konfiguration korrekt adressieren. Bei einer Änderung der Konfiguration ist eine Änderung der Steuerapplikation erforderlich, damit Funktionseinrichtung im Rahmen der Anwendung der Steuerapplikation korrekt adressiert werden können.

Das erfindungsgemäße Kommunikationssystem löst dieses Problem, indem Funktionseinrichtungen anhand einer Funktionalnetzwerkadresse, die zumindest teilweise von der Konfiguration des Schienenfahrzeugs unabhängig ist, mittels der Steuerapplikation adressierbar sind. Dies hat den wesentlichen Vorteil, dass die Steuerapplikation für das Schienenfahrzeug unabhängig von der Konfiguration des Schienenfahrzeugs entworfen werden kann. Selbst bei einer Änderung der Konfiguration kann somit die gleiche Steuerapplikation weiter verwendet werden. Auf diese Weise wird eine Änderung der Konfiguration des Schienenfahrzeugs, beispielsweise das Entfernen eines Restaurant-Wagens oder eines Traktionswagen, vereinfacht, da die Steuerapplikation oder zumindest wesentliche Teile davon nicht angepasst werden müssen. Dies erhöht die Flexibilität beim Betrieb des Schienenfahrzeugs.

Das Kommunikationsnetzwerk umfasst vorzugsweise ein Ethernet-Netzwerk oder ist als solches ausgebildet. Das Schienenfahrzeug ist vorzugsweise als Triebzug ausgebildet.

Die Funktionseinrichtung ist von einer Mehrzahl von Netzwerckomponenten, die gemeinsam anhand einer Funktionalnetzwerkadresse adressierbar sind, gebildet. Ein Beispiel für eine Funktionseinrichtung im Sinne der Erfindung ist ein Wagen des Schienenfahrzeugs mit im Wagen vorhandenen einzelnen Netzwerkkomponenten.

Der Fachmann versteht den Begriff Steuerapplikation vorzugsweise als eine Steuerungs- und Kommunikations-Software. Die Steuerapplikation ist weiter vorzugsweise eine für den Fahrzeugführer vorgesehene und aus dem Führerraum bedienbare Steuerapplikation. Der Fachmann versteht die Formulierung "Adressierung der Funktionseinrichtung mittels einer Steuerapplikation" dahingehend, dass die Steuerapplikation ausgebildet ist, die Funktionseinrichtung unter Verwendung der Funktionalnetzwerkadresse zu adressieren.

Die Konfiguration repräsentiert gemäß dem fachmännischen Verständnis eine Verteilung von Funktionseinrichtungen entlang oder innerhalb des Schienenfahrzeugs sowie ihre zugeordnete Funktion. Insbesondere versteht der Fachmann die Konfiguration als eine bestimmte Zusammenstellung mehrerer Wagen zu einem Triebzug (Triebzug-Konfiguration).

Erfindungsgemäß umfasst die Funktionalnetzwerkadresse einen Relativanteil, welcher eine zu adressierende Funktionseinrichtung unter einer Mehrzahl von Funktionseinrichtungen gleicher Funktion identifiziert. Es wurde erkannt, dass insbesondere bei einer Konfiguration des Schienenfahrzeugs mit mehreren Funktionseinrichtungen gleicher Funktion eine Mehrdeutigkeit bei der Adressierung anhand des funktionsspezifischen Anteils auftreten kann. Um in einer solchen Konfiguration eine eindeutige Adressierung zu erreichen, dient der Relativanteil zur Identifizierung der zu adressierenden Funktionseinrichtung unter der Mehrzahl von Funktionseinrichtungen gleicher Funktion.

Bei einer bevorzugten Weiterbildung repräsentiert der Relativanteil eine Relativposition der Funktionseinrichtung relativ zu einer weiteren Funktionseinrichtung gleicher Funktion. Vorzugsweise stellt die Relativposition eine Position der Funktionseinrichtung entlang einer Längserstreckung, weiter vorzugsweise in Fahrtrichtung des Schienenfahrzeugs gesehen, dar.

Bevorzugt umfasst die Relativposition in einer Reihe von Funktionseinrichtungen gleicher Funktion eine Positionszahl, welche die Position der Funktionseinrichtung innerhalb der Reihe repräsentiert.

Ein Beispiel für eine Funktionalnetzwerkadresse bei einer Adressierung eines Wagens als Funktionseinrichtungen ist "TW2". Dabei repräsentiert der funktionsspezifische Anteil "TW" die Funktion "Triebwagen" und die Positionszahl "2" den zweiten Triebwagen in einer Reihe von mehreren Triebwagen des Schienenfahrzeugs.

Erfindungsgemäß umfasst das Kommunikationssystems eine Kommunikationseinrichtung, welche ausgebildet ist, die Funktionalnetzwerkadresse auf eine Netzwerkadresse einer Netzwerkkomponente einer konfigurationsabhängigen Netzwerkstruktur des Schienenfahrzeugs abzubilden. Der Fachmann versteht den Begriff "Kommunikationseinrichtung" vorzugsweise als eine Kommunikationsschicht zur Übersetzung der mittels der Steuerapplikation verwendeten Funktionalnetzwerkadresse in eine Netzwerkadresse, welche von den im Fahrzeug vorhandenen Kommunikationsprotokollen verwendet wird. Die Netzwerkadresse umfasst vorzugsweise eine IP-Adresse. Vorzugsweise durchlaufen sämtliche mittels der Steuerapplikation an eine Funktionseinrichtung adressierte Daten die Kommunikationsschicht.

Bei der Anwendung der Ausführungsform für die Adressierung von Wagen innerhalb einer Triebzug-Konfiguration mittels der Steuerapplikation ist die Kommunikationseinrichtung vorzugsweise unabhängig von der Triebzug-Konfiguration ausgebildet. Weiter vorzugsweise ist die Ausbildung der Kommunikationseinrichtung anhängig von einem im Triebzug eingesetzten Kommunikationsnetzwerk bzw. -bus und einer Zuordnung einer Netzwerckomponente zu einem Wagen, die für die gewünschte Funktionalität adressiert werden kann. So muss die Steuerapplikation beispielsweise für eine Steuerung einer wagenlokalen Traktion lediglich den gewünschten Traktionswagen anhand der Funktionalnetzwerkadresse adressieren. Die Kommunikationseinrichtung übersetzt die von der Steuerapplikation verwendete Funktionalnetzwerkadresse in eine Netzwerkadresse des für die Traktionssteuerung zuständigen Steuergeräts (als Netzwerkkomponente) des Traktionswagens.

Bei einer bevorzugten Weiterbildung des Kommunikationssystems umfasst die Netzwerkstruktur vorzugsweise ein Ethernet-Netzwerk, bestehend aus Netzwerken zur Kommunikation auf Fahrzeug- oder Wagenebene "Fahrzeugbus" (vorzugsweise PROFINET) und einen "Zugbus" zur Kommunikation auf Zugebene (vorzugsweise ein Ethernet-Train-Backbone (ETB)). Vorzugsweise hängt die Netzwerkstruktur von der Konfiguration ab. Mit anderen Worten: Die Kommunikationseinrichtung übersetzt die Funktionalnetzwerkadresse in eine Netzwerkadresse, beispielsweise eine IP-Adresse, welche abhängig von der Konfiguration und der damit einhergehenden Netzwerkstruktur des Schienenfahrzeugs ist.

Gemäß einer weiteren bevorzugten Weiterbildung des Kommunikationssystems ist die Kommunikationseinrichtung ausgebildet, die Abbildung auf Basis einer Ermittlung der Konfiguration des Schienenfahrzeugs durchzuführen. Im Rahmen der Ermittlung wird einer Funktionseinrichtung vorzugsweise ein Funktionsattribut zugeordnet, welches eine Funktion der Funktionseinrichtungen angibt.

Für die beispielhafte Anwendung bei einer Adressierung von Wagen innerhalb einer Triebzug-Konfiguration kann dies wie folgt verstanden werden: Die Kommunikationseinrichtung kennt das im Schienenfahrzeug vorhandene Kommunikationsnetzwerk bzw. den Kommunikationsbus. Zudem hat die Kommunikationseinrichtung Kenntnis darüber, welches Steuergerät als Netzwerckomponente in einem Wagen (z.B. Traktionswagen) für eine gewünschte Funktionalität (z.B. Traktionssteuerung) adressiert werden kann. Damit die Kommunikationseinrichtung in die Lage versetzt wird, die Funktionalnetzwerkadresse auf eine Netzwerkadresse der Netzwerkstruktur bei einer bestimmten Triebzug-Konfiguration abzubilden, liefert die Ermittlung der Triebzug-Konfiguration eine Basis hierfür.

Gemäß einer weitergehenden Weiterbildung ist die Ermittlung auf Basis einer Zugtaufe und/oder anhand einer vorgegebenen Konfigurationsinformation durchführbar. Die Ermittlung auf Basis einer Zugtaufe stellt ein dynamisches und automatisiertes Verfahren zum Ermitteln der Konfiguration dar. Im Rahmen der Zugtaufe wird vorzugsweise ein Taufergebnis ermittelt. Anhand des Taufergebnisses übersetzt die Kommunikationseinrichtung die Funktionalnetzwerkadresse in die Netzwerkadresse der Netzwerkstruktur des Schienenfahrzeugs. Die Zugtaufe umfasst vorzugsweise eine ETB-Taufe. Alternativ oder zusätzlich kann die Konfiguration anhand der vorgegebenen Konfigurationsinformation statisch bereitgestellt werden. Beispielsweise kann die Konfiguration durch eine Konstruktion des Schienenfahrzeugs vorgegeben sein. Alternativ oder zusätzlich können mehrere unterschiedliche Konfigurationsinformationen, welcher jeweils eine von mehreren Konfigurationsvarianten repräsentieren, bereitgestellt werden. Des Weiteren kann die Konfiguration aus mehreren vorgegebenen Konfigurationsvarianten auswählbar sein. Die Auswahl erfolgt vorzugsweise durch das Bedien- oder Instandhaltungspersonal des Schienenfahrzeugs.

Die Erfindung betrifft ferner ein Verfahren zum Betreiben eines Kommunikationssystems eines Schienenfahrzeugs, umfassend: Ermitteln einer Konfiguration des Schienenfahrzeugs, Zuordnen einer Funktionalnetzwerkadresse zu einer Funktionseinrichtung eines Kommunikationsnetzwerks des Kommunikationssystems auf Basis der ermittelten Konfiguration und Adressieren der wenigstens einen Funktionseinrichtung des Kommunikationsnetzwerks anhand der Funktionalnetzwerkadresse mittels einer Steuerapplikation, wobei die Funktionalnetzwerkadresse einen funktionsspezifischen Anteil, welcher eine Funktion der Funktionseinrichtung repräsentiert, umfasst.

Eine bevorzugte Ausführungsform des erfindungsgemäßen Verfahrens umfasst: Abbilden der Funktionalnetzwerkadresse auf eine Netzwerkadresse einer Netzwerkkomponente einer konfigurationsabhängigen Netzwerkstruktur des Schienenfahrzeugs mittels einer Kommunikationseinrichtung.

Gemäß einer weiteren bevorzugten Ausführungsform des erfindungsgemäßen Verfahrens umfasst das Ermitteln der Konfiguration: Ermitteln einer Funktion der Funktionseinrichtung und einer Position der Funktionseinrichtung innerhalb und/oder entlang des Schienenfahrzeugs.

Gemäß einer weiteren bevorzugten Ausführungsform des erfindungsgemäßen Verfahrens erfolgt das Abbilden auf Basis des Ermittelns der Konfiguration des Schienenfahrzeugs.

Bei einer Weiterbildung des Verfahrens erfolgt das Ermitteln auf Basis einer Zugtaufe und/oder anhand einer vorgegebenen Konfigurationsinformation.

Zu Ausgestaltungen, Weiterbildungen, Ausgestaltungsdetails und Vorteilen des erfindungsgemäßen Verfahrens wird auf die Beschreibung zu den entsprechenden Systemmerkmalen verwiesen.

Ein Ausführungsbeispiel der Erfindung wird nun anhand der Zeichnungen erläutert. Es zeigen
- Figur 1: eine schematische Querschnittsansicht eines Schienenfahrzeugs gemäß einem Ausführungsbeispiel eines erfindungsgemäßen Kommunikationssystems und
- Figur 2: ein schematisches Ablaufdiagramm eines Ausführungsbeispiels eines erfindungsgemäßen Verfahrens.

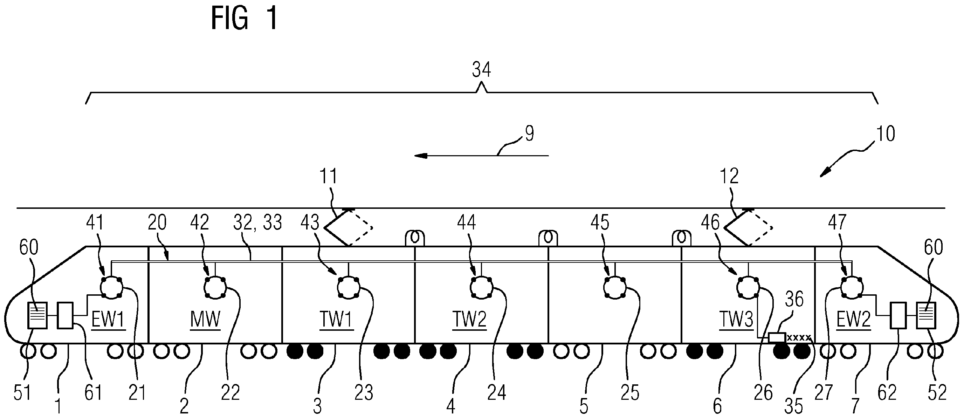

Figur 1 zeigt ein Schienenfahrzeug 10 in einer seitlichen Querschnittsansicht. In der betrachteten Ausführung ist das Schienenfahrzeug 10 als Verband von mehreren Wagen 1-7 mit zumindest einem Triebwagen ausgebildet. Das Schienenfahrzeug 10 ist zum Transport von Passagieren vorgesehen.

Das Schienenfahrzeug 10 bewegt sich in einem Fahrbetrieb in Fahrtrichtung 9. Das Schienenfahrzeug 10 umfasst ein Kommunikationsnetzwerk 20, welches einen Zugbus 32 sowie in jedem der Wagen 1-7 ein Ethernet-Netzwerk 21-27 mit einem Fahrzeugbus, insbesondere gemäß dem Profinet-Standard, aufweist. Der Zugbus 32 ist als Ethernet-Train-Backbone 33 ausgebildet. Der Zugbus 32 und die Ethernet-Netzwerke 21-27 bilden eine Netzwerkstruktur 34 des Schienenfahrzeugs 10. Die Netzwerkstruktur 34 hängt von einer Konfiguration des Schienenfahrzeugs 10 ab, welche eine Verteilung der Wagen 1-7 und ihre zugeordnete Funktion entlang des Schienenfahrzeugs 10 repräsentiert. Die Wagen 1-7 bilden zusammen mit ihren jeweiligen Ethernet-Netzwerken 21-27 in der in Figur 1 gezeigten Betrachtungsweise jeweils eine Funktionseinrichtung 41-47 des Kommunikationsnetzwerks 20.

Wagen 1 ist ein Endwagen EW in Fahrtrichtung 9 vorn. Wagen 7 ist ein Endwagen EW in Fahrtrichtung 9 hinten. Wagen 2 ist ein Mittelwagen MW, welcher keinen Antrieb aufweist. Die Wagen 3, 4 und 6 sind Traktionswagen TW, wobei die Wagen 3 bzw. 6 jeweils einen Pantographen 11 bzw. 12 aufweisen. Die Traktionswagen 3, 4 und 6 dienen zum Antrieb des Schienenfahrzeugs 10 und weisen jeweils (nicht gezeigt) einen Transformator, einen Traktionsstromrichter, einen Hilfsbetriebeumrichter und wenigstens einen Fahrmotor auf.

In dem Wagen 1 bzw. 7 ist jeweils eine Recheneinheit 51 bzw. 52 angeordnet. Die Recheneinheiten 51 und 52 sind jeweils ausgebildet, eine Steuerapplikation 60 in Form einer Steuerungs- und Kommunikations-Software auszuführen. Im Rahmen der Ausführung der Steuerapplikation 60 ist es erforderlich, wenigstens eine der Funktionseinrichtungen 41-47 zu adressieren.

Die Adressierung der Funktionseinrichtungen 41-47 wird im Folgenden am Beispiel der Traktionswagen 3, 4 und 6 beschrieben: Für die Adressierung von Traktionswagen nutzt die Steuerapplikation 60 eine Funktionalnetzwerkadresse TW1, TW2 und/oder TW3. In Fahrtrichtung 9 gesehen befindet sich der Wagen 3, welcher mittels der Steuerapplikation 60 anhand der Funktionalnetzwerkadresse TW1 adressierbar ist, an der absoluten Position 3. Wagen 4, welcher mittels der Steuerapplikation 60 anhand der Funktionalnetzwerkadresse TW2 adressierbar ist, befindet sich an der absoluten Position 4. Wagen 6, welcher mittels der Steuerapplikation 60 anhand der Funktionalnetzwerkadresse TW3 adressierbar ist, befindet sich an der absoluten Position 6.

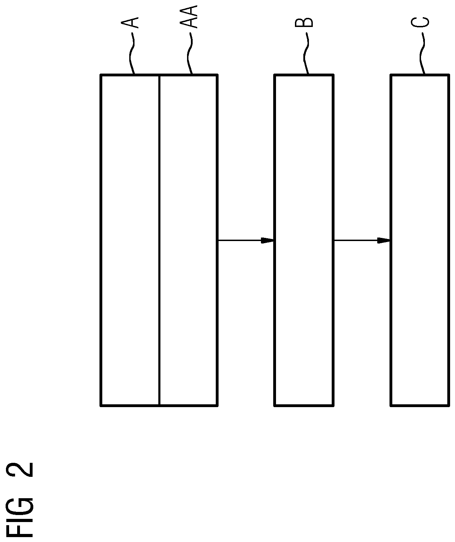

In einem Verfahrensschritt A (Figur 2) wird bei einer Zugtaufe eine Konfiguration des Schienenfahrzeugs 10 ermittelt. Mit anderen Worten: Das Ermitteln der Konfiguration gemäß Verfahrensschritt A erfolgt dadurch, dass die Funktion der Wagen 1-7 und die Position der Wagen 1-7 innerhalb des Schienenfahrzeugs 10 in einem Verfahrensschritt AA ermittelt wird.

Die jeweilige Funktion eines Wagens wird durch Funktionsattribute angegeben, beispielsweise: "führend", "kann Traktion übergeordnet steuern", "hat Traktion", etc. So wird im Rahmen der Zugtaufe für das in Figur 1 gezeigte Ausführungsbeispiel ermittelt, dass die Wagen 1 bzw. 7 jeweils als Endwagen ausgebildet sind, die Traktion übergeordnet steuern können. Eine Funktionalnetzwerkadresse EW1 bzw. EW2 des Wagens 1 bzw. 7 weist einen funktionsspezifischen Anteil "EW" und einen Relativanteil "1" bzw. "2" auf. Der funktionsspezifische Anteil "EW" repräsentiert die Funktion der Endwagens 1 bzw. 7, wonach dieser die Traktion übergeordnet steuern kann.

Zudem wird im Rahmen der Zugtaufe ermittelt, dass die Wagen 3, 4 und 6 jeweils als Traktionswagen ausgebildet sind. Die Funktionalnetzwerkadresse TW1, TW2 bzw. TW3 des Wagens 3, 4 bzw. 6 weist einen funktionsspezifischen Anteil "TW" und einen Relativanteil "1", "2" bzw. "3" auf. Der funktionsspezifische Anteil "TW" repräsentiert die Funktion der Wagen 3, 4 bzw. 6, wonach diese eine Traktion aufweisen.

In einem Verfahrensschritt B adressiert die Steuerapplikation 60 eine der Funktionseinrichtungen 41-47 mittels der jeweiligen Funktionalnetzwerkadresse. Beispielsweise adressiert die Steuerapplikation 60 den Wagen 6 unter Verwendung der Funktionalnetzwerkadresse TW3. Die Funktionalnetzwerkadresse TW3 wird in einem Verfahrensschritt C mittels einer Kommunikationseinrichtung 61 des Wagens 1 und einer Kommunikationseinrichtung 62 des Wagens 7 auf eine Netzwerkadresse, beispielsweise eine IP-Adresse, der Netzwerkstruktur 34 des Schienenfahrzeugs 10 abgebildet. Mit anderen Worten: Die Kommunikationseinrichtung 61 bzw. 62 übersetzt die Funktionalnetzwerkadresse TW3 in eine IP-Adresse der Netzwerkstruktur 34 des Schienenfahrzeugs 10. Ist es beispielsweise gewünscht, die Traktion des dritten Traktionswagens 6 zu steuern, übersetzt die Kommunikationseinrichtung 61 die von der Steuerapplikation 60 verwendete Funktionalnetzwerkadresse TW3 in eine IP-Adresse 35 eines für die Traktionssteuerung zuständigen Steuergeräts 36 des Wagen 6.

Die Verwendung der Funktionalnetzwerkadresse durch die Steuerapplikation 60 hat den Vorteil, dass die Steuerapplikation 60 in die Lage versetzt wird, Funktionseinrichtungen 41-47 des Schienenfahrzeugs 10 unabhängig von der aktuellen Konfiguration des Schienenfahrzeugs 10 zu adressieren. Die Steuerapplikation 60 muss bei einer Änderung der Konfiguration des Schienenfahrzeugs 10 nicht angepasst werden.

## Patentansprüche

1. Kommunikationssystem für ein Schienenfahrzeug (10), umfassend:
- ein Kommunikationsnetzwerk (20), welches wenigstens eine Funktionseinrichtung (41-47) aufweist, welche von einer Mehrzahl von Netzwerkkomponenten, die gemeinsam anhand einer Funktionalnetzwerkadresse adressierbar sind, gebildet ist,
o wobei der wenigstens einen Funktionseinrichtung (43; 44; 46) die Funktionalnetzwerkadresse (TW1; TW2; TW3) für eine Adressierung der Funktionseinrichtung (43; 44; 46) mittels einer Steuerapplikation (60) zugeordnet ist,
o wobei die Funktionalnetzwerkadresse (TW1; TW2; TW3) einen funktionsspezifischen Anteil (TW) aufweist, welcher eine Funktion der Funktionseinrichtung (43; 44; 46) bei einer vorgegebenen Konfiguration des Schienenfahrzeugs (10) repräsentiert, und
o wobei die Funktionalnetzwerkadresse (TW1; TW2; TW3) einen Relativanteil ("1"; "2"; "3") umfasst, welcher eine zu adressierende Funktionseinrichtung (43; 44; 46) unter einer Mehrzahl von Funktionseinrichtungen (43, 44, 46) gleicher Funktion (TW) identifiziert, und
- eine Kommunikationseinrichtung (61, 62), welche ausgebildet ist, die Funktionalnetzwerkadresse (TW3) auf eine Netzwerkadresse (35) einer Netzwerkkomponente (36) einer konfigurationsabhängigen Netzwerkstruktur (34) des Schienenfahrzeugs (10) abzubilden.

2. Kommunikationssystem nach Anspruch 1,
wobei der Relativanteil ("1"; "2"; "3") eine Relativposition der Funktionseinrichtung (43; 44; 46) relativ zu einer weiteren Funktionseinrichtung (43; 44; 46) gleicher Funktion repräsentiert.

3. Kommunikationssystem nach Anspruch 1 oder 2,
wobei die Netzwerkstruktur (34)
- vorzugsweise ein Ethernet-Netzwerk, bestehend aus Netzwerken zur Kommunikation auf Fahrzeug- oder Wagenebene, vorzugsweise PROFINET, und
- einen Zugbus (32), vorzugsweise einen Ethernet-Train-Backbone (33),
umfasst.

4. Kommunikationssystem nach wenigstens einem der vorhergehenden Ansprüche,
wobei die Kommunikationseinrichtung (61, 62) ausgebildet ist, die Abbildung auf Basis einer Ermittlung der Konfiguration des Schienenfahrzeugs (10) durchzuführen.

5. Kommunikationssystem nach Anspruch 4,
wobei die Ermittlung
- auf Basis einer Zugtaufe und/oder
- anhand einer vorgegebenen Konfigurationsinformation durchführbar ist.

6. Verfahren zum Betreiben eines Kommunikationssystems eines Schienenfahrzeugs (10), umfassend:
Ermitteln (A) einer Konfiguration des Schienenfahrzeugs (10), Zuordnen einer Funktionalnetzwerkadresse (TW1; TW2; TW3) zu einer Funktionseinrichtung (43; 44; 46) eines Kommunikationsnetzwerks (20) des Kommunikationssystems auf Basis der ermittelten Konfiguration, wobei die Funktionseinrichtung (41-47) von einer Mehrzahl von Netzwerkkomponenten, die gemeinsam anhand der Funktionalnetzwerkadresse adressierbar sind, gebildet ist,
Adressieren (B) der wenigstens einen Funktionseinrichtung (43; 44; 46) des Kommunikationsnetzwerks (20) anhand der Funktionalnetzwerkadresse (TW1; TW2; TW3) mittels einer Steuerapplikation (60) und
Abbilden (C) der Funktionalnetzwerkadresse auf eine Netzwerkadresse (35) einer Netzwerkkomponente (36) einer konfigurationsabhängigen Netzwerkstruktur (34) des Schienenfahrzeugs (10) mittels einer Kommunikationseinrichtung (61, 62), wobei die Funktionalnetzwerkadresse (TW1; TW2; TW3) einen funktionsspezifischen Anteil (TW), welcher eine Funktion der Funktionseinrichtung (43; 44; 46) repräsentiert, umfasst und wobei die Funktionalnetzwerkadresse (TW1; TW2; TW3) einen Relativanteil ("1"; "2"; "3"), welcher eine zu adressierende Funktionseinrichtung (43; 44; 46) unter einer Mehrzahl von Funktionseinrichtungen (43, 44, 46) gleicher Funktion (TW) identifiziert, umfasst.

7. Verfahren nach Anspruch 6, wobei das Ermitteln (A) der Konfiguration umfasst:
Ermitteln (AA) einer Funktion der Funktionseinrichtung (41-47) und einer Position der Funktionseinrichtung (41-47) innerhalb und/oder entlang des Schienenfahrzeugs (10).

8. Verfahren nach Anspruch 6 oder 7,
wobei das Abbilden (C) auf Basis des Ermittelns (A) der Konfiguration des Schienenfahrzeugs (10) erfolgt.

9. Verfahren nach wenigstens einem der vorhergehenden Ansprüche 6-8,
wobei das Ermitteln (A)
- auf Basis einer Zugtaufe und/oder
- anhand eine vorgegebenen Konfigurationsinformation erfolgt.

## Claims

1. Communication system for a rail vehicle (10), comprising:
- a communication network (20) which has at least one functional device (41-47) which is formed by a plurality of network components which can be addressed jointly using a functional network address,
o wherein the at least one functional device (43; 44; 46) is assigned the functional network address (TW1; TW2; TW3) for addressing the functional device (43; 44; 46) by means of a control application (60),
o wherein the functional network address (TW1; TW2; TW3) has a function-specific portion (TW) which represents a function of the functional device (43; 44; 46) in a predefined configuration of the rail vehicle (10), and
o wherein the functional network address (TW1; TW2; TW3) comprises a relative portion ("1"; "2"; "3") which identifies a functional device (43; 44; 46) to be addressed among a plurality of functional devices (43, 44, 46) of the same function (TW), and
- a communication device (61, 62) which is embodied to map the functional network address (TW3) to a network address (35) of a network component (36) of a configuration-dependent network structure (34) of the rail vehicle (10).

2. Communication system according to claim 1,
wherein the relative portion ("1"; "2"; "3") represents a relative position of the functional device (43; 44; 46) relative to a further functional device (43; 44; 46) of the same function.

3. Communication system according to claim 1 or 2,
wherein the network structure (34) preferably comprises
- an Ethernet network, consisting of networks for communication at vehicle or carriage level, preferably PROFINET, and
- a train bus (32), preferably an Ethernet train backbone (33) .

4. Communication system according to at least one of the preceding claims,
wherein the communication device (61, 62) is embodied to carry out the mapping on the basis of a determination of the configuration of the rail vehicle (10).

5. Communication system according to claim 4,
wherein the determination can be performed
- on the basis of a train inauguration and/or
- using predetermined configuration information.

6. Method for operating a communication system of a rail vehicle (10), comprising:
Determination (A) of a configuration of the rail vehicle (10), Assignment of a functional network address (TW1; TW2; TW3) to a functional device (43; 44; 46) of a communication network (20) of the communication system on the basis of the determined configuration, wherein the functional device (41-47) is formed from a plurality of network components which can be addressed jointly using the functional network address,
Addressing (B) of the at least one functional device (43; 44; 46) of the communication network (20) using the functional network address (TW1; TW2; TW3) by means of a control application (60) and
Mapping (C) the functional network address to a network address (35) of a network component (36) of a configuration-dependent network structure (34) of the rail vehicle (10) by means of a communication device (61, 62),
wherein the functional network address (TW1; TW2; TW3) comprises a function-specific portion (TW) which represents a function of the functional device (43; 44; 46) and wherein the functional network address (TW1; TW2; TW3) comprises a relative portion ("1"; "2"; "3") which identifies a functional device (43; 44; 46) to be addressed among a plurality of functional devices (43, 44, 46) of the same function (TW).

7. Method according to claim 6, wherein the determination (A) of the configuration comprises:
Determination (AA) of a function of the functional device (41-47) and a position of the functional device (41-47) within and/or along the rail vehicle (10).

8. Method according to claim 6 or 7,
wherein the mapping (C) takes place on the basis of the determination (A) of the configuration of the rail vehicle (10) .

9. Method according to at least one of the preceding claims 6-8,
wherein the determination (A) takes place
- on the basis of a train inauguration and/or
- using predetermined configuration information.

## Revendications

1. Système de communication d'un véhicule (10) ferroviaire, comprenant :
- un réseau (20) de communication, qui a au moins un dispositif (41 à 47) fonctionnel, formé d'une pluralité de composants de réseau, qui peuvent être adressés conjointement à l'aide d'une adresse de réseau fonctionnelle,
∘ dans lequel au au moins un dispositif (43, 44, 46) fonctionnel est associé, au moyen d'une application (60) de commande, à l'adresse (TW1 ; TW2 ; TW3) de réseau fonctionnel pour un adressage du dispositif (43 ; 44 ; 46) fonctionnel,
∘ dans lequel l'adresse (TW1, TW2, TW3) de réseau fonctionnel a une partie (TW) spécifique à la fonction, qui représente une fonction du dispositif (43 ; 44 ; 46) fonctionnel dans une configuration données à l'avance du véhicule (10) ferroviaire, et
∘ dans lequel l'adresse (TW1; TW2 ; TW3) de réseau fonctionnel comprend une partie (« 1 » ; « 2 » ; « 3 ») relative, qui identifie un dispositif (43 ; 44 ; 46) fonctionnel à adresser parmi une pluralité de dispositifs (43, 44, 46) fonctionnels de même fonction (TW), et
- un dispositif (61, 62) de communication, constitué pour reproduire l'adresse (TW3) de réseau fonctionnel sur une adresse (35) de réseau d'un composant (36) de réseau d'une structure (34) de réseau, qui dépend de la configuration, du véhicule (10) ferroviaire.

2. Système de communication suivant la revendication 1,
dans lequel la partie (« 1 » ; « 2 » ; « 3 ») relative représente une position relative du dispositif (43 ; 44 ; 46) fonctionnel par rapport à un autre dispositif (43 ; 44 ; 46) fonctionnel de même fonction.

3. Système de communication suivant la revendication 1 ou 2, dans lequel la structure (34) du réseau comprend
- de préférence un réseau Ethernet, constitué de réseaux de communication sur un plan de véhicule ou de voiture, de préférence PROFINET, et
- un bus (32) de train, de préférence un ethernet-train-backbone (33 ).

4. Système de communication suivant au moins l'une des revendications précédentes,
dans lequel le dispositif ( 61, 62 ) de communication est constitué pour effectuer la reproduction sur la base d'une détermination de la configuration du véhicule (10) ferroviaire.

5. Système de communication suivant la revendication 4,
dans lequel la détermination peut être effectuée
- sur la base d'un baptême de train et/ou
- à l'aide d'une information de configuration donnée à l'avance.

6. Procédé pour faire fonctionner un système de communication d'un véhicule (10) ferroviaire, comprenant :
la détermination (A) d'une configuration du véhicule (10) ferroviaire,
l'association d'une adresse (TW1 ; TW2 ; TW3) de réseau fonctionnel à un dispositif (43 ; 44 ; 46) fonctionnel d'un réseau (20) de communication du système de communication sur la base de la configuration déterminée, le dispositif (41 à 47) fonctionnel étant formé d'une pluralité de composants de réseau, qui peuvent être adressés conjointement à l'aide de l'adresse de réseau fonctionnel,
l'adressage (B) d'au moins un dispositif (43 ; 44 ; 46) fonctionnel du réseau (20) de communication, à l'aide de l'adresse (TW1 ; TW2 ; TW3) de réseau fonctionnel, au moyen d'une application (60) de commande et
la reproduction (C) de l'adresse de réseau fonctionnel sur une adresse (35) de réseau d'un composant (36) de réseau d'une structure (34) de réseau, qui dépend de la configuration, du véhicule (10) ferroviaire au moyen d'un dispositif (61, 62) de communication, l'adresse (TW1 ; TW2 ; TW3) de réseau fonctionnel comprenant une partie (TW) spécifique à une fonction, qui représente une fonction du dispositif (43 ; 44 ; 46) fonctionnel, et l'adresse (TW1 ; TW2 ; TW3) de réseau fonctionnel comprenant une partie (« 1 » ; « 2 » ; « 3 ») relative, qui identifie un dispositif (43 ; 44 ; 46) fonctionnel à adresser parmi une pluralité de dispositifs (43, 44, 46) fonctionnels de même fonction (TW).

7. Procédé suivant la revendication 6, dans lequel la détermination (A) de la configuration comprend :
la détermination (AA) d'une fonction du dispositif (41 à 47) fonctionnel et d'une position du dispositif (41 à 47) fonctionnel dans et/ou le long du véhicule (10) ferroviaire.

8. Procédé suivant la revendication 6 ou 7,
dans lequel la reproduction (C) s'effectue sur la base de la détermination (A) de la configuration du véhicule (10) ferroviaire.

9. Procédé suivant au moins l'une des revendications 6 à 8 précédentes,
dans lequel la détermination (A) s'effectue
- sur la base d'un baptême de train et/ou
- à l'aide d'une information de configuration donnée à l'avance.
